# DEMANDE DE BREVET EUROPEEN

(11) **EP 1 568 520 A1**
(43) Date de publication de la demande: **31.08.2005**
(21) Numéro de dépôt: 05290343.2
(22) Date de dépôt: 16.02.2005
(51) Int. Cl.: B60D 5/00

(54) **Plancher élastique pour soufflet de couloir d'intercirculation**

(30) Priorité: 25.02.2004 FR 0401885
(71) Demandeur: HUTCHINSON, 75008 Paris (FR)
(72) Inventeur: Petit, Jean-Claude, 59420 Mouvaux (FR); De Antonio, Richard, 91700 Sainte Geneviève des Bois (FR)
(74) Mandataire: Jacquard, Philippe Jean-Luc

(57) **Abrégé**

L'invention est relative à un plancher élastique (2) destiné à être suspendu à un soufflet élastique ondulé (1) pour former un module de couloir d'intercirculation, ledit plancher présentant à ses extrémités transversales des bords remontants ondulés (21) et comportant à sa face inférieure des nervures transversales (27) dans lesquelles sont noyés des renforts métalliques (25) selon l'invention, au moins certains des renforts métalliques (25) présentent des extrémités (26) dépassant des nervures transversales (27), chacune de ces extrémités dépassantes (26) étant couplée à un dispositif de fixation (12) entre le plancher (2) et le soufflet (1) qui longent par l'extérieur lesdits bords remontants ondulés (21) et qui présentent une extrémité de fixation (33) au soufflet (1) qui est située au dessus des bords remontants (21).

## Description

La présente invention concerne un plancher élastique destiné à un couloir de passage assurant l'intercirculation entre deux voitures et plus particulièrement destiné à des applications ferroviaires telles que train, métro, tramway, etc... ou plus généralement à tout ensemble mobile ferroviaire ou non, ainsi qu'un couloir d'intercirculation comprenant ce plancher élastique.

Certains dispositifs connus nécessitent des portes et n'assurent pas la protection contre le froid et le bruit, d'autres font appel à un système se décomposant en un soufflet de protection et un plancher métallique avec tous les problèmes découlant des articulations et des glissières métalliques dans le plancher.

D'autres dispositifs encore nécessitent une réservation dans les extrémités de caisse pour loger les systèmes de plancher.

La plupart des dispositifs nécessitent des systèmes mécaniques de reprise ou d'appui par exemple sur la barre d'attelage. L'exploitation de tels dispositifs connus n'est pas à l'abri de problème de maintenance d'usure, de bruit, d'encombrement et de problème de nettoyage par exemple l'évacuation des eaux de nettoyage ou de cavités pouvant accumuler divers objets.

Il existe également des planchers élastiques qui sont raccordés à un soufflet, le plancher élastique et le soufflet formant un module de couloir d'intercirculation qui est autoportant. Un tel plancher élastique est décrit par exemple dans le Brevet Européen EP 860 305.

La mise en oeuvre d'un tel plancher, dont le poids est supporté par le soufflet, implique dans l'état actuel de la technique une liaison mécanique entre les bords remontants du plancher et le soufflet qui, outre le fait qu'elle est apparente, présente l'inconvénient d'une absence d'étanchéité qui engendre une faible atténuation acoustique au niveau de la liaison entre le plancher et le soufflet.

La présente invention a pour objet un plancher élastique pour couloir d'intercirculation, qui, tout en conservant ses propriétés quant aux exigences dûes aux débattements entre les caisses des voitures, présente une meilleure atténuation acoustique et une esthétique améliorée.

Dans la suite de la Demande et par définition on considère comme longitudinale la direction horizontale de déplacement en ligne droite de l'ensemble mobile, et comme transversale, la direction horizontale perpendiculaire à la direction longitudinale.

L'invention concerne ainsi un plancher élastique destiné à être suspendu à un soufflet élastique ondulé pour former un module de couloir d'intercirculation, ledit plancher présentant à ses extrémités transversales des bords remontants ondulés et comportant à sa face inférieure des nervures transversales dans lesquelles sont noyés des renforts métalliques, caractérisé en ce qu'au moins certains des renforts métalliques présentent des extrémités dépassant des nervures transversales, chacune de ces extrémités dépassantes étant couplée à un dispositif de fixation destiné à assurer une fixation du plancher audit soufflet et longeant par l'extérieur lesdits bords remontants ondulés, ledit dispositif de fixation présentant une extrémité de fixation au soufflet située au dessus des bords remontants.

Cette structure permet une fixation mécanique du plancher au soufflet qui est réalisée par l'extérieur indépendamment de la liaison entre les bords remontants et le soufflet, qui peut être ainsi réalisée facilement de manière étanche et donc dans de bonnes conditions acoustiques étant donné qu'il n' y a plus de fonction mécanique de support du plancher à remplir à cet endroit.

D'autre part, la liaison mécanique au soufflet, réalisée par l'extérieur, séparément de la liaison entre le plancher et le soufflet, permet également, par exemple à l'aide d'une fixation par vis, de conserver de bonnes qualités d'isolation acoustique.

Les bords remontants sont avantageusement disposés dans une région de coude du plancher.

Selon un mode de réalisation avantageux, le plancher élastique est caractérisé en ce qu'au moins un dispositif de fixation est une barre de reprise pourvue à une première extrémité d'un élément de fixation à une dite extrémité dépassante, et à une deuxième extrémité d'un élément de fixation à une onde du soufflet. Par exemple, une barre de reprise présente une première région de forme arrondie portant à ladite première extrémité un élément de fixation à une dite extrémité dépassante, cette première région se prolongeant par une deuxième région s'étendant vers le haut et se terminant à ladite deuxième extrémité par un élément de fixation à une onde du soufflet.

Au moins un élément de fixation peut être destiné à une fixation par vis.

L'invention concerne également un couloir d'intercirculation comportant au moins un module d'intercirculation comprenant un plancher élastique tel que défini ci-dessus, et un soufflet élastique ondulé, caractérisé en ce que l'extrémité de fixation des dispositifs de fixation est solidarisé au soufflet et en ce que les bords remontants ondulés du plancher sont solidaires de manière étanche aux ondes du soufflet élastique ondulé dans des régions respectives de géométrie complémentaire, qui sont en recouvrement.

Préférentiellement, le recouvrement entre les dites régions de géométrie complémentaire est situé dans une région de coude inférieure du module d'intercirculation.

Ladite solidarisation entre les bords remontants ondulés et le soufflet élastique ondulé est avantageusement réalisé par soudure.

Ladite solidarisation au soufflet des dispositifs de fixation est avantageusement réalisé par vis.

Le couloir d'intercirculation peut comporter deux dits modules d'intercirculation assemblés longitudinalement entre eux par un anneau de liaison.

De manière connue, les extrémités d'un module longitudinales peuvent être équipées de pièces métalliques et/ou composites permettant la fixation sur la caisse et/ou sur l'anneau de liaison.

D'autres caractéristiques et avantages de l'invention apparaîtront à la lecture de la description ci-après, en liaison avec les dessins annexés dans lesquels :
- la figure 1 représente en perspective un module d'intercirculation selon un mode de réalisation de l'invention.
- les figures 2a et 2b représentent respectivement en coupe transversale en en vue de dessus, un mode de réalisation d'un plancher selon l'invention, la figure 2c étant un agrandissement d'un détail de la figure 2b montrant le plancher par sa partie supérieure au droit de sa soudure au soufflet,
- Les figures 3a et 3b représentent respectivement en coupe transversale et en vue latérale un mode de réalisation d'un soufflet d'intercirculation associant deux modules d'intercirculation,
- Les figures 4a à 4c sont des vues en coupe montrant les raccordements, entre le plancher et le soufflet, la figure 4a étant un détail de la figure 3a, la figure 4b illustrant un détail de la jonction soudée, et la figure 4c montrant des bourrelets d'étanchéité 37 entre le soufflet et la voiture.

Un soufflet d'intercirculation équipé d'un plancher élastique comporte de manière connue au moins un module d'intercirculation présentant chacun une partie supérieure ou soufflet déformable 1 ayant des régions ondulées, ainsi qu'une partie inférieure ou plancher 2. Le soufflet 1 et le plancher 2 sont réalisés à base d'un mélange élastomère dans lequel peuvent être noyés des éléments textile de renfort (pour le soufflet) et du métal adhérisé au mélange (pour le plancher).

Le soufflet 1 et le plancher 2 sont des pièces différentes, qui sont assemblées pour former un module d'intercirculation, qui constitue une structure à périmètre fermé, de préférence autoportante.

Dans les couloirs d'intercirculation actuellement existants (notamment ligne METEOR à Paris), l'assemblage mécanique est réalisé au niveau des bords remontants ce qui impose des contraintes et des inconvénients :
- étant donné que le plancher est supporté par le soufflet, la liaison mécanique ne peut avoir lieu que dans une région verticale ou sensiblement verticale des bords latéraux du soufflet, ce qui impose que les bords remontants du plancher s'étendent jusqu'à une région du soufflet qui est sensiblement verticale. Ceci complique la fabrication du plancher, en raison des contraintes techniques qu'impose le moulage de bords remontants dont la direction, au niveau de leur extrémité est sensiblement verticale,
- étant donné que la liaison mécanique s'effectue au niveau du recouvrement entre les bords remontants et le soufflet, la liaison n'est pas étanche, ce qui fait que le bruit extérieur n'est pas amorti, d'où un faible niveau d'isolation acoustique.

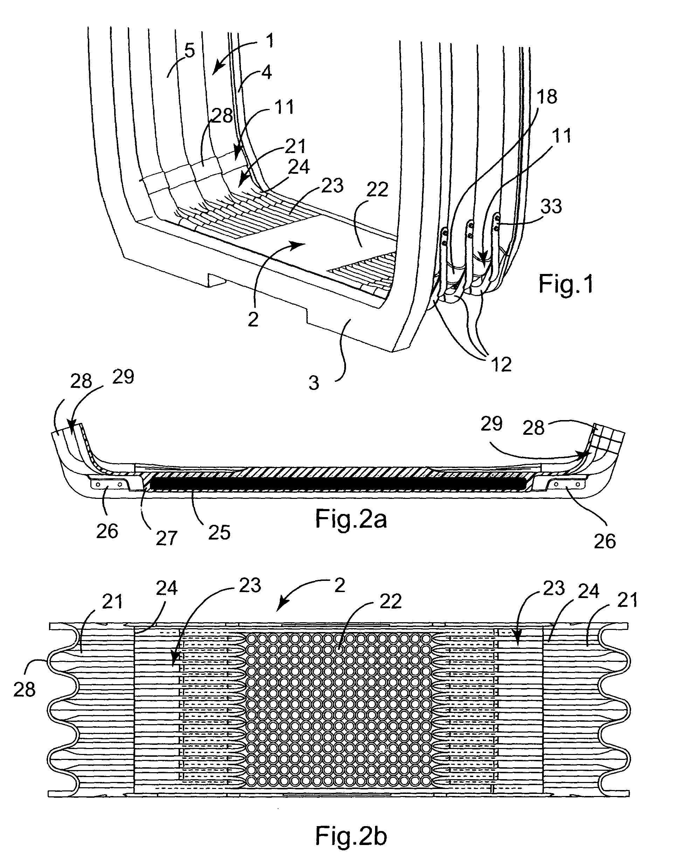

Un couloir d'intercirculation selon l'invention (Figure 1) comporte de manière classique un soufflet ondulé 1 présentant des grandes ondes 5 et un plancher élastique 2. Il se distingue par le fait que le plancher élastique 2 est suspendu au soufflet 1 par des barres de reprises 12 qui assurent une liaison de portance par l'extérieur au-dessus de la zone 11 en recouvrement entre l'extrémité supérieure 28 des bords remontants 21 du plancher et les extrémités inférieures 18 du soufflet 1.

De la sorte, les fonctions portance et étanchéité sont dissociées, et les éléments de liaison mécanique ne sont que peu visibles de l'intérieur du couloir.

Le plancher 2 peut présenter de manière connue une région centrale pastillée 22 permettant la circulation des passagers et, de part et d'autre de cette région 22, une zone ondulée comprenant des petites ondes 23 qui se terminent à leur extrémité 24 par des grandes ondes qui forment les bords remontants 21 (figures 1 et 2b) dont la géométrie est, au moins à leur extrémité 28 située dans la région 11 en recouvrement, complémentaire de celle des ondes 5 à l'extrémité inférieure correspondante 18 du soufflet 1 de manière à réaliser une liaison étanche, par exemple par soudure. Dans la région 11, on désigne par 18 l'extrémité en recouvrement du soufflet, et par 28, celle du plancher.

Le module d'intercirculation représenté à la figure 1 est fixé à la caisse 3 à une de ses extrémités longitudinales, et à son autre extrémité longitudinale, à un anneau 4 assurant sa liaison à un autre module d'intercirculation, l'ensemble des deux modules constituant le couloir d'intercirculation.

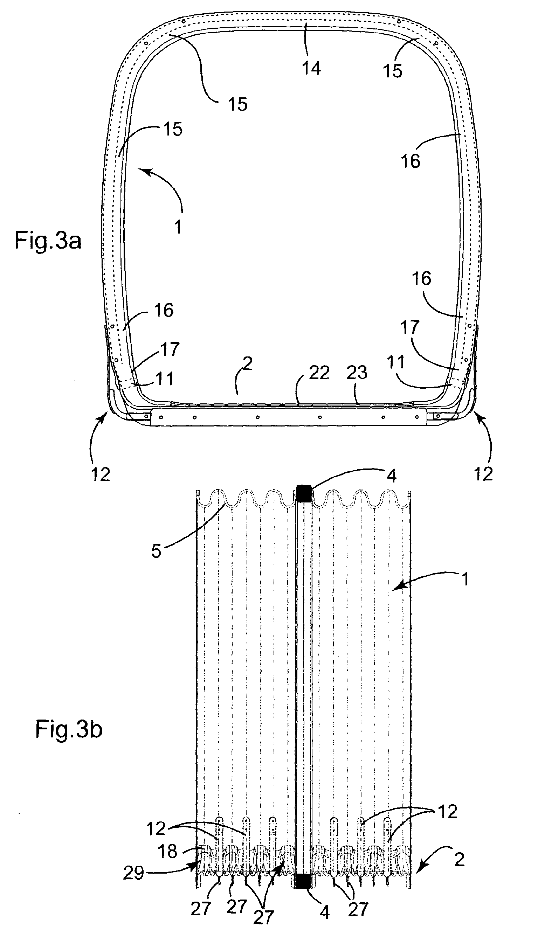

Comme le montre la figure 3a, le couloir d'intercirculation présente un contour fermé constitué par une face supérieure 14 plane ou légèrement concave (vu de l'intérieur), de deux coudes supérieurs 15, de deux faces latérales verticales 16 planes ou légèrement concaves, et de deux coudes inférieurs 17 assurant la liaison avec le plancher 2 présentant une face porteuse 22, 23.

Comme le montre également cette figure 3a, la liaison d'étanchéité entre le plancher 2 et le soufflet 1 est située dans la région du coude inférieur 17, ce qui permet de limiter la remontée des bords remontants 21. On voit également que, du fait que le raccordement d'étanchéité a lieu dans cette région du coude 17, l'extrémité 25 des bords remontants 21 est située dans une région de coude 29 et présente une direction inclinée par rapport à la verticale contrairement à l'Art Antérieur où les bords remontants devaient, pour assurer la fonction mécanique de suspension du plancher 2, s'étendre jusqu'à un bord latéral vertical de sorte que leur extrémité était pratiquement orientée verticalement.

Il en résulte un avantage important quant au moulage du plancher étant donné que lors du moulage, la remontée est moins haute et n'est plus dirigée verticalement.

A la figure 3a, on voit également que le raccordement mécanique qui assure la portance du plancher 2 par le soufflet 1 est réalisée dans les faces latérales 16 d'orientation sensiblement verticale (à la courbure près des faces 16), au-dessus de la région 11 de recouvrement entre les extrémités 18 et 28 du soufflet 1 et du plancher 2.

Cette séparation dans l'espace entre ces raccordements permet d'assurer une liaison étanche, par exemple par soudure, entre le soufflet 1 et le plancher 2 au niveau de la liaison de recouvrement 11, d'où une amélioration de l'atténuation des bruits extérieurs. Cette soudure peut être réalisée en reprise dans un moule.

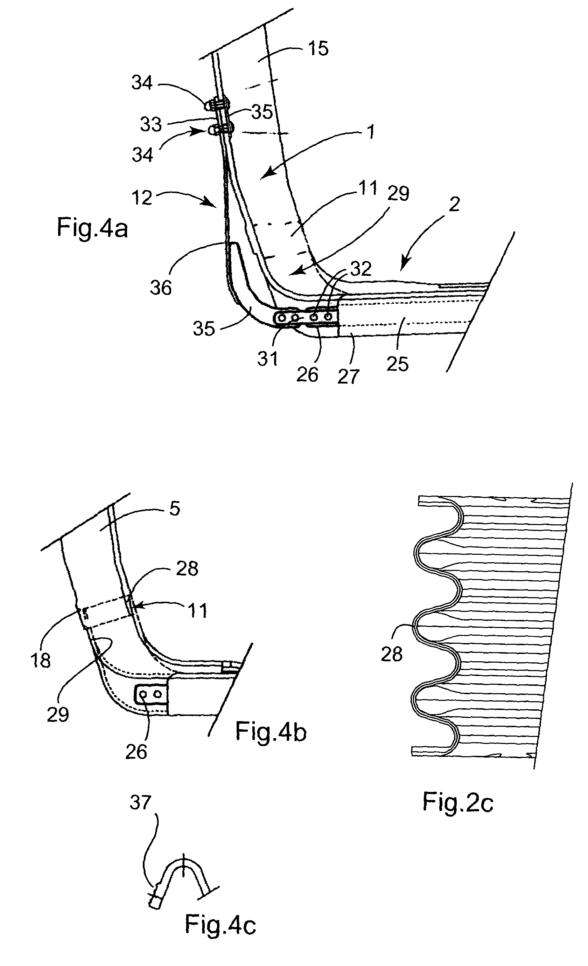

Le raccordement mécanique assurant la portance du plancher 2 est explicité ci-après en liaison avec les figures 3b et 4a.

De manière connue, le plancher 2 présente à sa partie inférieure des nervures transversales 27 dans lesquelles sont noyés des renforts métalliques 25. Selon l'invention, au moins certains de ces renforts métalliques 25 servent également de bras de supportage et présentent à leurs extrémités des régions débordantes 26 permettant de recevoir les barres de reprises 12. Comme le montre l'exemple de la figure 3b, un renfort métallique 25 sur deux sert également de bras de supportage.

Chaque barre de reprise 12 est fixée, à une extrémité 31, par exemple par des vis 32, à une région débordante 26, et à une autre extrémité 33, au soufflet 1. Cette fixation au soufflet 1 peut être réalisée par des vis 34. Cette fixation s'effectue préférentiellement dans le fond des ondes du soufflet 2 vu de l'intérieur, c'est-à-dire au sommet des ondes, vu de l'extérieur.

Chaque barre de reprise 12 présente par exemple une première région coudée 35 et une patte de raccordement 36 orientée sensiblement verticalement. Comme le montre la figure 4a, la fixation mécanique ainsi réalisée par l'extérieur ne déborde pratiquement pas du contour extérieur du couloir d'intercirculation.

La fixation mécanique au soufflet permet une bonne étanchéité aux fluides et du point de vue acoustique, du fait qu'elle est réalisée en dehors de la région d'emboîtement 11.

Les vis 34 traversent des ouvertures ménagées dans le soufflet 2 et la fixation met en oeuvre une contre-plaque 35 qui rigidifie l'ensemble et contribue à parfaire l'étanchéité aux fluides et du point de vue acoustique.

Un autre avantage est que la démontabilité du plancher est assurée, la liaison par soudure entre le plancher 2 et le soufflet 1 pouvant être désolidarisée après démontage de la liaison mécanique boulonnée.

## Revendications

1. Plancher élastique destiné à être suspendu à un soufflet élastique ondulé pour former un module de couloir d'intercirculation, ledit plancher présentant à ses extrémités transversales des bords remontants ondulés et comportant à sa face inférieure des nervures transversales dans lesquelles sont noyés des renforts métalliques, **caractérisé en ce qu'**au moins certains des renforts métalliques (25) présentent des extrémités (26) dépassant des nervures transversales (27), chacune de ces extrémités dépassantes (26) étant couplée à un dispositif de fixation (12) entre le plancher (2) et le soufflet (1) qui longent par l'extérieur lesdits bords remontants ondulés (21) et qui présentent une extrémité de fixation au soufflet (1) située au-dessus des bords remontants (21).

2. Plancher selon la revendication 1, **caractérisé en ce que** les bords remontants sont disposés dans une région de coude (29) du plancher (2).

3. Plancher selon une des revendications 1 ou 2, **caractérisé en ce qu'**au moins un dispositif de fixation est une barre de reprise (12) qui présente une première extrémité pourvue d'un élément de fixation à une dite extrémité dépassante (26), et une deuxième extrémité (33) opposée à la première extrémité et qui est pourvue d'un élément de fixation à une onde (5) du soufflet (1).

4. Plancher selon la revendication 3, **caractérisé en ce que** la barre de reprise présente une première région de forme arrondie (35) qui comporte la première extrémité et une deuxième région s'étendant vers le haut et qui se termine par ladite deuxième extrémité (33).

5. Plancher selon une des revendications précédentes, **caractérisé en ce qu'**au moins un élément de fixation est destiné à une fixation par vis.

6. Plancher selon une des revendications précédentes, **caractérisé en ce qu'**il est en élastomère.

7. Couloir d'intercirculation comportant au moins un module d'intercirculation comprenant un plancher élastique selon une des revendications précédentes, et un soufflet élastique ondulé, **caractérisé en ce que** l'extrémité de fixation des dispositifs de fixation est solidarisé au soufflet et **en ce que** les bords remontants ondulés (21) du plancher (2) sont solidaires de manière étanche aux ondes (5) du soufflet élastique ondulé (2) dans des régions respectives de géométrie complémentaire (18, 28), qui sont en recouvrement.

8. Couloir d'intercirculation selon la revendication 7, **caractérisé en ce que** ladite solidarisation étanche entre les bords remontants ondulés (21) et les ondes (5) du soufflet élastique ondulé (2) est réalisé par soudure.

9. Couloir d'intercirculation selon une des revendications 7 ou 8, **caractérisé en ce que** ladite solidarisation au soufflet (1) des dispositifs de fixation est réalisée par vis.

10. Couloir d'intercirculation selon une des revendications 7 à 9, **caractérisé en ce que** le recouvrement entre lesdites régions de géométrie complémentaire est situé dans une région de coude inférieure (17) du module d'intercirculation.

11. Couloir d'intercirculation selon une des revendications 7 à 10, **caractérisé en ce qu'**il comporte deux dits modules d'intercirculation assemblés longitudinalement entre eux par un anneau de liaison (4).
